# EUROPÄISCHE PATENTSCHRIFT

(11) **EP 1 449 725 B1**
(45) Veröffentlichungstag und Bekanntmachung des Hinweises auf die Patenterteilung: **26.07.2006**
(21) Anmeldenummer: 04090030.0
(22) Anmeldetag: 04.02.2004
(51) Int. Cl.: B60R 22/34

(54) **Befestigungseinrichtung für einen Sicherheitsgurt**
Fixing device for a safety belt
Dispositif de fixation pour une ceinture de sécurité

(30) Priorität: 20.02.2003 DE 10308167
(43) Veröffentlichungstag der Anmeldung: 25.08.2004
(73) Patentinhaber: TAKATA-PETRI (Ulm) GmbH, 89081 Ulm (DE)
(72) Erfinder: Glinka, Oliver, 89081 Ulm (DE)
(74) Vertreter: Fischer, Uwe

(56) Entgegenhaltungen:
- EP-A- 0 703 124
- EP-A- 0 864 471
- US-A- 5 788 177

## Beschreibung

Die Erfindung bezieht sich auf eine Befestigungseinrichtung mit den Merkmalen gemäß dem Oberbegriff des Anspruchs 1.

Eine Befestigungseinrichtung für einen Sicherheitsgurt ist aus der deutschen Patentschrift DE 197 80 583 C1 bekannt. Bei der vorbekannten Befestigungseinrichtung handelt es sich um einen Gurtaufroller mit einem gurtkraftbegrenzenden Element. Das gurtkraftbegrenzende Element ist bei dem vorbekannten Gurtaufroller durch einen Torsionsstab und eine Torsionshülse gebildet. Die Funktionsweise des Gurtaufrollers ist wie folgt: Kommt es zu einem Fahrzeugunfall, so wird der Fahrzeuginsasse aufgrund seiner Bewegungsenergie in den Sicherheitsgurt "eintauchen"; durch diese "Eintauchbewegung" wird ruckartig eine Zugkraft auf den sperrenden Sicherheitsgurt ausgeübt. Würde der Sicherheitsgurt nun nicht nachgeben können, so würde eine erhebliche Rückhaltekraft auf den Fahrzeuginsassen aufgebaut werden, wodurch ernsthafte Verletzungen auftreten könnten. Um dies zu vermeiden, ist bei dem vorbekannten Gurtaufroller der Torsionsstab bzw. die Torsionshülse vorgesehen, die aufgrund ihrer Torsion ein Abrollen des Sicherheitsgurtes und damit eine Verlängerung des Sicherheitsgurtes bewirken. Durch das weitere Abrollen wird die Rückhaltekraft reduziert, und es werden Verletzungen durch den Gurt vermieden.

Die gattungsbildende Druckschrift EP 0 703 124 A1 offenbart einen Gurtaufroller, bei dem eine Gurtkraftbegrenzung durch Abwickeln und Umbiegen eines Drahtes bewirkt wird. Im Falle eines Unfalls wird der Draht auf einen Sperrzahnkranz aufgewickelt, der mittels einer Sperrklinke mit einer Gurtspindel in Verbindung steht.

Das US-Patent 5,788,177 beschreibt einen Gurtaufroller, bei dem zwei Drähte zur Gurtkraftbegrenzung jeweils auf einer Drahtspindel aufgewickelt werden, die im Inneren einer innen hohl ausgebildeten Gurtspindel angeordnet sind. Falls die beiden Drähte unterschiedlich beschaffen sind und/oder unterschiedlich ab- bzw. aufgewickelt werden, lassen sich insgesamt drei unterschiedliche Rückhalteniveaus einstellen.

Die Druckschrift EP 0 864 471 A1 offenbart ebenfalls einen Gurtaufroller, bei dem eine Gurtkraftbegrenzung durch einen Draht bewirkt wird, der abgewickelt und dabei plastisch verformt wird und dadurch Energie aufnimmt.

Der Erfindung liegt die Aufgabe zugrunde, eine Befestigungseinrichtung für einen Sicherheitsgurt anzugeben, bei der die Rückhaltekraft in einem weiten Bereich quasi beliebig eingestellt bzw. vorgegeben werden kann. Beispielsweise soll die Rückhaltekraft von dem Insassengewicht und/oder von der Schwere des Unfalls beeinflussbar sein.

Ausgehend von einer Befestigungseinrichtung der eingangs angegebenen Art wird diese Aufgabe erfindungsgemäß durch die kennzeichnenden Merkmale des Anspruchs 1 gelöst. Vorteilhafte Ausgestaltungen der erfindungsgemäßen Befestigungseinrichtung sind in den Unteransprüchen beschrieben.

Danach ist erfindungsgemäß vorgesehen, dass das gurtkraftbegrenzende Element mindestens eine Drahtabwicklungseinrichtung aufweist, aus der Draht bei Ausübung einer vorgegebenen Zugkraft herausziehbar ist. Mindestens ein Ende des Sicherheitsgurtes steht mittelbar oder unmittelbar mit dem Draht in Verbindung; dies führt dazu, dass der Draht aus der Drahtabwicklungseinrichtung herausgezogen wird, sobald eine durch den Sicherheitsgurt geschützte Person - in der Regel also ein Fahrzeuginsasse - im Falle eines Unfalls eine entsprechend große Zugkraft auf den Sicherheitsgurt ausübt.

Weiterhin ist erfindungsgemäß vorgesehen, dass die Drahtabwicklungseinrichtung zumindest zwei verschiedene "Zugkräfte" bzw. Gurthaltekräfte mittels einer Schaltwippe bereitstellt, die die erforderliche Zugkraft zum Herausziehen des Drahtes aus der Drahtabwicklungseinrichtung umstellt bzw. verändert. Bezüglich der Schaltwippe ist vorgesehen, dass diese zwei Stellungen aufweist, von denen eine Stellung der Schaltwippe zu einer höheren Zugkraft zum Herausziehen des Drahtes führt als die andere Stellung. Mit einer solchen Schaltwippe lassen sich also in relativ einfacher Weise zwei unterschiedliche Haltekräfte des Sicherheitsgurtes einstellen.

Ein wesentlicher Vorteil der erfindungsgemäßen Befestigungseinrichtung ist die Trennung des eigentlichen "Gurtsystems" auf der einen Seite und dem "gurtkraftbegrenzenden System" auf der anderen Seite. Die Drahtabwicklungseinrichtung als gurtkraftbegrenzendes System ist - anders als beispielsweise bei dem vorbekannten Gurtaufroller, bei dem der Torsionsstab unmittelbar ein Teil des Gurtaufrollmechanismus ist - ausschließlich über einen Draht oder über mehrere Drähte mit dem Gurtsystem verbunden und kann daher sehr individuell optimiert werden. So kann ohne weiteres durch entsprechende Vorrichtungen innerhalb der Drahtabwicklungseinrichtung der Draht kraft- und auslenkungsabhängig gebremst oder auch freigegeben werden, wodurch eine quasi beliebige Charakteristik der Kraftbegrenzung erreicht werden kann. Beispielsweise kann ohne größeren Aufwand eine zwei- oder mehrstufige degressive Kraftbegrenzung erreicht werden, indem die Drahtauslenkung bzw. das Herausziehen des Drahtes aus der Drahtabwicklungseinrichtung durch das "Abschalten" von Reibungs- und/oder Deformierungskräften ("Biegekräften") - also "bremsenden" Kräften - zunehmend erleichtert wird.

Um zu gewährleisten, dass die Gurtkraftbegrenzung auch nach vielen Betriebsjahren noch zuverlässig funktioniert, wird es als vorteilhaft angesehen, wenn als "bremsende" Kräfte ausschließlich Deformationskräfte bzw. Biegekräfte ausgenutzt werden; Reibungskräfte sind sehr stark von der Oberflächenbeschaffenheit der aufeinander reibenden Gegenstände abhängig und können sich beispielsweise aufgrund von Korrosion oder dergleichen ändern. Es wird somit als vorteilhaft angesehen, wenn der mindestens eine Draht beim Herausziehen wenigstens einmal umgebogen wird.

Das Umbiegen des mindestens einen Drahtes beim Herausziehen lässt sich besonders einfach und damit vorteilhaft durch mindestens eine Umlenkrolle und/oder eine Umlenkstange erreichen.

Als vorteilhaft wird es angesehen, wenn die erfindungsgemäße Befestigungseinrichtung für einen Sicherheitsgurt in einer Gurtaufrollvorrichtung integriert wird. Dies lässt sich vorteilhaft und in einfacher Weise durchführen, indem eine den Gurt auf- und/oder abrollende Spindel der Gurtaufrollvorrichtung mittelbar oder unmittelbar mit dem mindestens einen Draht der Drahtabwicklungseinrichtung zusammenwirkt.

Besonders einfach und damit vorteilhaft lässt sich die Spindel mit dem mindestens einen Draht der Drahtabwicklungseinrichtung verbinden, wenn in der Befestigungseinrichtung ein Sperrzahnkranz derart angeordnet wird, dass er über eine Sperrklinke drahtfest mit der Spindel verbindbar ist. Sobald eine Verbindung zwischen der Spindel und dem Sperrzahnkranz durch die Sperrklinke erreicht ist, wird der aus der Drahtabwicklungseinrichtung herausgezogene Draht auf ein Drahtmagazin des Sperrzahnkranzes aufgewickelt.

Die eine Stellung der Schaltwippe, bei der also eine höhere Zugkraft zum Herausziehen des Drahtes notwendig ist als bei der anderen Stellung, lässt sich in besonders einfacher Weise erreichen, indem der Draht in dieser Stellung der Schaltwippe zumindest einmal beim Herausziehen umgelenkt wird.

Besonders einfach und dadurch vorteilhaft lässt sich das Umschalten der Schaltwippe von der einen Stellung in die andere Stellung auf pyrotechnischem Wege durchführen. Ein wesentlicher Vorteil des pyrotechnischen Umstellens ist darin zu sehen, dass dieses sehr schnell erfolgt.

Nachteilig bei dem pyrotechnischen Umschalten ist jedoch, dass es sich bei pyrotechnischem Material um sogenanntes Gefahrgut handelt. Soll die Verwendung eines solchen Gefahrgutes vermieden werden, so kann das Umschalten der Schaltwippe von der einen Stellung in die andere Stellung in sehr einfacher Weise auch durch einen Elektromagneten erfolgen. Bei Schaltwippen ist nämlich aufgrund ihrer Anordnung von sich aus das Bestreben vorhanden, sich umzuschalten, so dass eine Blockierverriegelung durch einen Elektromagneten problemlos aufgehoben werden kann. Allein durch das Aufheben der Blockierverriegelung kann somit das Umschalten der Schaltwippe von der einen Stellung in die andere Stellung erreicht werden.

Um zu gewährleisten, dass das Umschalten der Stellung der Schaltwippe nicht abrupt, sondern kontinuierlich bzw. weitgehend kontinuierlich erfolgt, wird es als vorteilhaft angesehen, wenn die Schaltwippe derart angeordnet ist, dass sie beim Übergang von der einen Stellung in die andere Stellung eine Verformungsarbeit verrichten muss.

Zur Erläuterung der Erfindung zeigen:
- Figur 1: ein Ausführungsbeispiel für eine erfindungsgemäße Befestigungseinrichtung für einen Sicherheitsgurt und
- Figur 2: ein Diagramm, das die Haltekraft des Sicherheitsgurtes im zeitlichen Verlauf zeigt, wobei in dem Diagramm ein Umschalten der Haltekraft dargestellt ist.

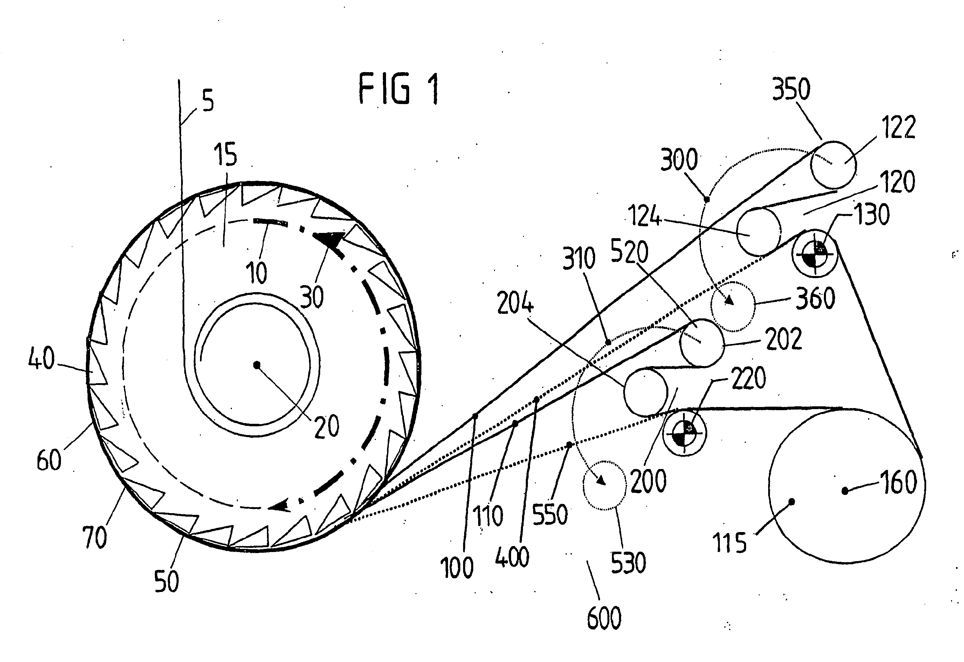

Die Figur 1 zeigt ein Gurtband 5, das auf eine Spindel 10 eines "Gurtaufrollers" 15 aufgerollt ist. Die Spindel 10 ist um eine Achse 20 drehbar gelagert. An ihrem äußeren Rand weist die Spindel 10 eine Sperrklinke 30 auf, die bei einem abrupten Beschleunigen der Spindel 10 "ausklinkt" und in Kontakt kommt mit inneren Sperrzacken 40 eines Sperrzahnkranzes 50. Der Sperrzahnkranz 50 ist ebenfalls um die Achse 20 drehbar gelagert; zu einer Drehung des Sperrzahnkranzes 50 kommt es jedoch nur, wenn die Sperrklinke 30 mit den inneren Sperrzacken 40 des Sperrzahnkranzes 50 verriegelt.

Der Sperrzahnkranz 50 weist an seinem äußeren Rand 60 ein Drahtmagazin 70 auf. In der Figur 1 erkennt man, dass auf das Drahtmagazin 70 des Sperrzahnkranzes 50 zwei Drähte aufgewickelt werden können, nämlich ein erster Draht 100 sowie ein zweiter Draht 110. Die beiden Drähte 100 und 110 sind außerdem jeweils auf einer Drahtspule 115 aufgewickelt.

Zwischen der Drahtspule 115 und dem Drahtmagazin 70 ist dabei eine erste Schaltwippe 120 - bestehend aus einer ersten Umlenkrolle 122 und einer zweiten Umlenkrolle 124 - sowie eine dritte Umlenkrolle 130 angeordnet. Durch eine Rotationsbewegung des Sperrzahnkranzes 50 wird der erste Draht 100 von der Drahtspule 115 abgerollt und gleichzeitig auf das Drahtmagazin 70 des Sperrzahnkranzes 50 aufgerollt; dabei dreht sich die Drahtspule 115 um ihre Achse 160.

Auf der Drahtspule 115 ist darüber hinaus der zweite Draht 110 aufgewickelt; über eine zweite Schaltwippe 200 - bestehend aus einer vierten Umlenkrolle 202 und einer fünften Umlenkrolle 204 - sowie über eine sechste Umlenkrolle 220 wird der zweite Draht 110 von der Drahtspule 115 abgewickelt und auf das Drahtmagazin 70 des Sperrzahnkranzes 50 aufgewickelt, sobald sich der Sperrzahnkranz 50 dreht.

Die beiden Schaltwippen 120 und 200 sind jeweils umklappbar ausgestaltet, wie durch die gestrichelten Pfeile 300 und 310 in der Figur 1 dargestellt ist.

Kommt es beispielsweise zu einem Umklappen der ersten Schaltwippe 120, so bewegt sich die erste Umlenkrolle 122 der ersten Schaltwippe 120 von ihrer ersten Stellung 350 in ihre zweite Stellung 360. Dies führt dazu, dass die Drahtführung geändert wird; konkret wird der erste Draht 100 auf seinem Weg von der Drahtspule 115 zum Drahtmagazin 70 des Sperrzahnkranzes 50 nicht mehr dreimal umgelenkt, sondern nur noch einmal, und zwar durch die dritte Umlenkrolle 130. Dies ist in der Figur 1 durch die gestrichelte Linie 400 dargestellt, die anzeigt, wie der erste Draht 100 nach einem Umklappen der ersten Schaltwippe 120 von der ersten Stellung 350 in die zweite Stellung 360 verläuft.

In der Figur 1 ist darüber hinaus gezeigt, dass auch die zweite Schaltwippe 200 umgeschaltet werden kann. So lässt sich die vierte Umlenkrolle 202 der zweiten Schaltwippe 200 von einer in der Figur 1 mit dem Bezugszeichen 520 gekennzeichneten ersten Stellung in eine zweite, mit dem Bezugszeichen 530 gekennzeichnete Stellung umklappen. Die Position der fünften Umlenkrolle 204 der zweiten Schaltwippe 200 bleibt dabei unverändert.

Bei diesem Umklappen der zweiten Schaltwippe 200 von der ersten Stellung 520 in die zweite Stellung 530 wird ebenfalls der Verlauf des zweiten Drahtes 110 beeinflusst. So wird der zweite Draht 110 nach dem Umklappen der zweiten Schaltwippe 200 nur noch von der sechsten Umlenkrolle 220 umgebogen. Ein zusätzliches zweifaches Umlenken bzw. Umbiegen des zweiten Drahtes 110 durch die zweite Schaltwippe 200, wie es in der ersten Stellung 520 der vierten Umlenkrolle 202 der Fall ist, ist in dieser zweiten Stellung 530 nicht mehr vorhanden.

Zusammengefasst wird somit durch die sechs Umlenkrollen 122, 124, 130, 202, 204, 220, die Drahtspule 115 und das Drahtmagazin 70 eine Drahtabwicklungseinrichtung 600 gebildet, die auf den Gurtaufroller 15 einwirkt. Der Gurtaufroller 15 und die Drahtabwicklungseinrichtung 600 bilden gemeinsam eine Befestigungseinrichtung für den Sicherheitsgurt bzw. das Gurtband 5.

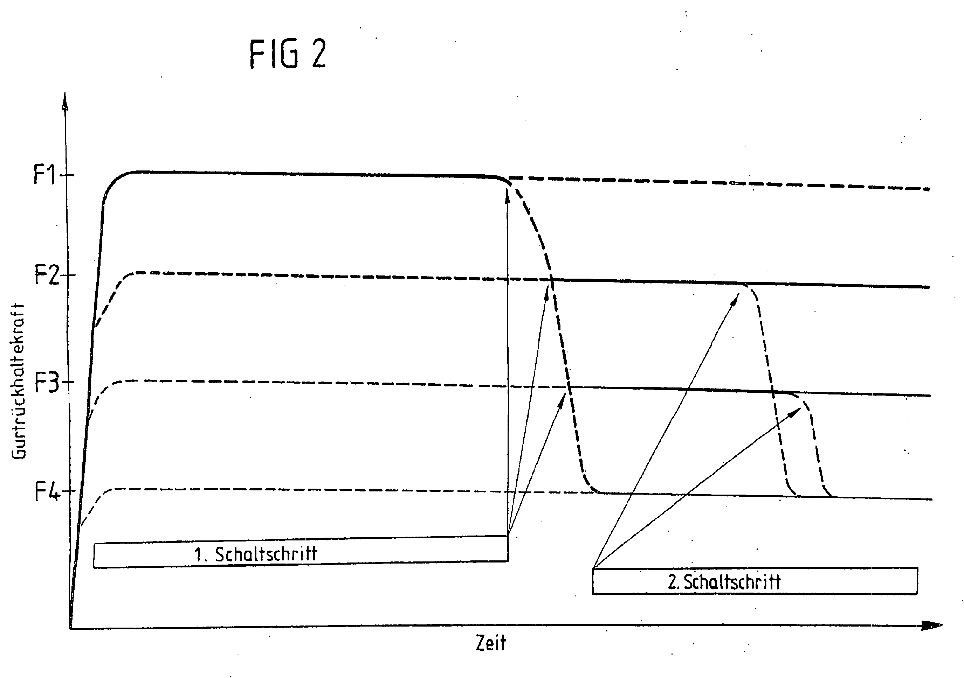

Nachfolgend soll nun die Funktionsweise der Befestigungseinrichtung gemäß Figur 1 in Zusammenschau mit der Figur 2 erläutert werden.

Im Falle eines Fahrzeugunfalles wird eine durch das Gurtband 5 bzw. den Sicherheitsgurt 5 der Befestigungseinrichtung gemäß Figur 1 gesicherter Fahrzeuginsasse eine Zugkraft auf das Gurtband 5 ausüben. In diesem Fall wird die Sperrklinke 30 der Spindel 10 einsteuern, was dazu führt, dass die Spindel 10 mit dem drehbar gelagerten Sperrzahnkranz 50 verriegelt. Dies führt wiederum dazu, dass sich der Sperrzahnkranz 50 mitdreht, weil nämlich eine erhebliche Zugkraft auf den Sicherheitsgurt ausgeübt wird. Aufgrund des Drehens des Sperrzahnkranzes 50 wird der erste Draht 100 und der zweite Draht 120 auf das Drahtmagazin 70 des Sperrzahnkranzes 50 aufgerollt.

Zunächst befindet sich die erste Schaltwippe 120 und die zweite Schaltwippe 200 jeweils in ihrer ersten Stellung 350 bzw. 520, das heißt, dass die beiden Drähte 100 und 110 einen Verlauf nehmen, wie es in der Figur 1 mit den durchgezogenen Linien gezeigt ist.

Aufgrund der ersten Stellung der beiden Schaltwippen 120 und 200 müssen die beiden Drähte 100 und 110 jeweils dreimal umgelenkt bzw. umgebogen werden. So muss der erste Draht 100 über die dritte Umlenkrolle 130, über die zweite Umlenkrolle 124 und über die erste Umlenkrolle 122 geführt werden, bevor er das Drahtmagazin 70 - von der Drahtspule 115 kommend - erreicht. Entsprechendes gilt für den zweiten Draht 110, der über die sechste, fünfte und vierte Umlenkrolle 220, 204, 202 geführt wird, bis er das Drahtmagazin 70 erreicht.

Aufgrund dieses jeweils dreimaligen Umlenkens ist eine erhebliche Umformung des Drahtes bzw. ein erhebliches "Umbiegen" des Drahtes erforderlich, was großen Kraftaufwand erfordert.

Bei entsprechender Zugkraft werden die Drähte 100 und 110 trotz allem auf das Drahtmagazin 70 aufgerollt. Die "Gegenkraft", die die Drahtabwicklungseinrichtung 600 bereitstellt ist annähernd konstant; die Gegenkraft entspricht der Gurtrückhaltekraft, die das Gurtband 5 bei einem Fahrzeugunfall auf den Fahrzeuginsassen ausübt. Diese "Gegenkraft" bzw. Gurtrückhaltekraft trägt in dem Diagramm gemäß Figur 2 das Bezugszeichen F1.

Die Gurtrückhaltekraft F1 kann nun verringert werden, indem beispielsweise die erste Schaltwippe 120 und/oder die zweite Schaltwippe 200 umgeschaltet werden.

Wird beispielsweise die erste Schaltwippe 120 von ihrer ersten Stellung in ihre zweite Stellung gebracht, so reduziert sich die resultierende Gurtrückhaltekraft auf einen Wert F2 (vgl. Figur 2).

Wird statt der ersten Schaltwippe 120 die zweite Schaltwippe 200 umgeschaltet, so reduziert sich die resultierende Gurtrückhaltekraft auf einen Wert F3 (vgl. Figur 2). Werden beide Schaltwippen 120 und 200 umgeschaltet, so reduziert sich die resultierende Gurtrückhaltekraft auf einen Wert F4.

In einem ersten Schaltschritt kann also die Gurtrückhaltekraft von dem Wert F1 auf einen der Werte F2, F3 oder F4 umgeschaltet werden. Wird auf die Gurtrückhaltekraft F2 oder F3 geschaltet, so kann in einem zweiten Schaltschritt die Gurtrückhaltekraft noch auf den Wert F4 reduziert werden.

Im Ergebnis ist es bei der Befestigungseinrichtung gemäß der Figur 1 also möglich, die Rückhaltekraft für den Sicherheitsgurt 5 einzustellen. So kann durch Wahl der Schaltstellung der beiden Schaltwippen 120 und 200 wahlweise einer von vier verschiedenen Werten für die Gurtrückhaltekraft voreingestellt werden, und es kann während eines Crashs bzw. Unfalls die Gurtrückhaltekraft stufenweise reduziert werden.

Bei der Befestigungseinrichtung gemäß der Figur 1 sind zum Umbiegen der beiden Drähte 100 und 110 die Umlenkrollen 122, 124, 130, 202, 204 und 220 vorgesehen; anstelle von Umlenkrollen können auch Umlenkstangen eingesetzt werden. Außerdem können Umlenkstangen und Umlenkrollen auch kombiniert bzw. gemeinsam eingesetzt werden.

Bei der Befestigungseinrichtung gemäß Figur 1 können statt zwei Schaltwippen auch mehr Schaltwippen eingesetzt werden, wenn eine noch mehrstufigere Kraftbegrenzung erreicht werden soll. Reichen hingegen lediglich zwei verschiedene Stufen für die Gurtrückhaltekraft aus, so reicht es, wenn die Befestigungseinrichtung ausschließlich eine einzige Schaltwippe und einen einzigen Draht aufweist.

Im Übrigen können zusätzlich zu den beiden Drähten gemäß der Figur 1 auch weitere Drähte Verwendung finden.

Falls es als ausreichend angesehen wird, lediglich einen einzigen Wert für die Gurtrückhaltekraft vorzusehen, kann auf eine Schaltwippe auch vollständig verzichtet werden. Die Gurtrückhaltekraft kann dann durch ein oder mehrere "Biegeelemente" eingestellt werden, die den Draht oder die Drähte umbiegen und durch das Umbiegen die Gurtrückhaltekraft bestimmen. Das bzw. die Biegeelemente können beispielsweise durch Stangen und/oder durch Umlenkrollen gebildet sein.

### Bezugszeichenliste

- **5**: Gurtband
- **10**: Spindel
- **15**: Gurtaufroller
- 20: Achse
- **30**: Sperrklinke
- **40**: innere Sperrzacken
- **50**: Sperrzahnkranz
- **60**: äußerer Rand
- **70**: Drahtmagazin
- **100**: erster Draht
- **110**: zweiter Draht
- **115**: Drahtspule
- **120**: erste Schaltwippe
- **122**: erste Umlenkrolle
- **124**: zweite Umlenkrolle
- **130**: dritte Umlenkrolle
- **160**: Achse der Drahtspule
- **200**: zweite Schaltwippe
- **202**: vierte Umlenkrolle
- **204**: fünfte Umlenkrolle
- **220**: sechste Umlenkrolle
- **300**: Umklapprichtung (Pfeil)
- **310**: Umklapprichtung (Pfeil)
- **350**: erste Stellung der ersten Schaltwippe
- **360**: zweite Stellung der ersten Schaltwippe
- **400**: Drahtverlauf
- **520**: erste Stellung der zweiten Schaltwippe
- **530**: zweite Stellung der zweiten Schaltwippe
- **600**: Drahtabwicklungseinrichtung

## Patentansprüche

1. Befestigungseinrichtung für einen Sicherheitsgurt (5) mit mindestens einem gurtkraftbegrenzenden Element, das die auf eine durch den Sicherheitsgurt (5) geschützte Person wirkende Haltekraft (F1, F2, F3, F4) begrenzt, in dem es in einem vorgegebenen Maß ein Nachgeben des Sicherheitsgurtes (5) ermöglicht, wobei das gurtkraftbegrenzende Element eine Drahtabwicklungseinrichtung (600) aufweist, aus der mindestens ein Draht (100, 110) bei Ausübung einer vorgegebenen Zugkraft herausziehbar ist, und ein Ende des Sicherheitsgurtes mittelbar oder unmittelbar mit dem mindestens einen Draht (100, 110) derart in Verbindung steht, dass der mindestens eine Draht (100, 110) aus der Drahtabwicklungseinrichtung (600) herausgezogen wird, sobald die vom Sicherheitsgurt auf den Insassen ausgeübte Haltekraft (F1, F2, F3, F4) die vorgegebene Zugkraft erreicht,
**dadurch gekennzeichnet, dass**
die Drahtabwicklungseinrichtung (600) zumindest eine Schaltwippe (120 und 200) aufweist, durch die der Draht geführt (100, 110) ist, wobei die Schaltwippe (120, 200) zwei Stellungen (350, 360, 520, 530) aufweist, von denen eine Stellung (350, 520) der Schaltwippe (120, 200) zu einer höheren Zugkraft zum Herausziehen des Drahtes (100, 110) führt als die andere Stellung (360 und 530).

2. Befestigungseinrichtung nach Anspruch 1, **dadurch gekennzeichnet, dass** der mindestens eine Draht (100, 110) beim Herausziehen wenigstens einmal umgebogen wird.

3. Befestigungseinrichtung nach Anspruch 2, **dadurch gekennzeichnet, dass** das Umbiegen des mindestens einen Drahtes (100, 110) beim Herausziehen durch mindestens eine Umlenkrolle und/oder eine Umlenkstange erfolgt.

4. Befestigungseinrichtung nach einem der vorangehenden Ansprüche, **dadurch gekennzeichnet, dass** die Befestigungseinrichtung eine Gurtaufrollvorrichtung (15) mit einer den Gurt auf- und abrollenden Spindel (10) aufweist, die mittelbar oder unmittelbar mit dem mindestens einen Draht (100, 110) der Drahtabwicklungseinrichtung (150) zusammenwirkt.

5. Befestigungseinrichtung nach Anspruch 4, **dadurch gekennzeichnet, dass** ein Sperrzahnkranz (50) vorhanden ist, der über eine Sperrklinke (30) drehfest mit der Spindel (10) verbindbar ist, wobei der Sperrzahnkranz (50) ein Drahtmagazin (70) aufweist, auf dem der aus der Drahtabwicklungseinrichtung (150) herausgezogene Draht (100, 110) aufgewickelt wird.

6. Befestigungsvorrichtung nach einem der vorangehenden Ansprüche, **dadurch gekennzeichnet, dass** bei der einen Stellung (350, 520) der Schaltwippe (120, 200) der Draht (100, 110) beim Herausziehen zumindest einmal umgelenkt wird.

7. Befestigungseinrichtung nach einem der vorangehenden Ansprüche, **dadurch gekennzeichnet, dass** das Umschalten der Schaltwippe (120, 200) von der einen Stellung (350, 520) in die andere Stellung (360, 530) pyrotechnisch erfolgt.

8. Befestigungseinrichtung nach einem der vorangehenden Ansprüche, **dadurch gekennzeichnet, dass** das Umschalten der Schaltwippe (120, 200) von der einen Stellung (350, 520) in die andere Stellung (360, 530) mit einem Elektromagneten erfolgt.

9. Befestigungseinrichtung nach einem der vorangehenden Ansprüche, **dadurch gekennzeichnet, dass** die Schaltwippe (120, 200) derart angeordnet ist, dass sie beim Übergang von der einen Stellung (350, 520) in die andere Stellung (360, 530) eine Verformungsarbeit verrichten muss.

## Claims

1. Fastening device for a seat belt (5) having at least one belt-force-limiting element which limits the retaining force (F1, F2, F3, F4) acting on a person protected by the seat belt (5) by enabling the seat belt (5) to yield to a predetermined extent, the belt-force-limiting element having a wire-unwinding device (600) from which at least one wire (100, 110) can be pulled on exertion of a predetermined tensile force, and one end of the seat belt being connected indirectly or directly to the at least one wire (100, 110) in such a manner that the at least one wire (100, 110) is pulled out of the wire-unwinding device (600) as soon as the retaining force (F1, F2, F3, F4) exerted by the seat belt on the occupant reaches the predetermined tensile force, **characterized in that** the wire-unwinding device (600) has at least one switching rocker (120 and 200) by means of which the wire (100, 110) is guided, the switching rocker (120, 200) having two positions (350, 360, 520, 530), of which one position (350, 520) of the switching rocker (120, 200) results in a higher tensile force for pulling out the wire (100, 110) than the other position (360 and 530).

2. Fastening device according to Claim 1, **characterized in that** the at least one wire (100, 110) is bent over at least once as it is being pulled out.

3. Fastening device according to Claim 2, **characterized in that** the at least one wire (100, 110) is bent over as it is being pulled out by means of at least one deflecting roller and/or deflecting rod.

4. Fastening device according to one of the preceding claims, **characterized in that** the fastening device has a belt-retracting device (15) with a spindle (10) which retracts and unrolls the belt and interacts indirectly or directly with the at least one wire (100, 110) of the wire-unwinding device (150).

5. Fastening device according to Claim 4, **characterized in that** a ratchet ring (50) is provided which can be connected in a rotationally fixed manner via a pawl (30) to the spindle (10), the ratchet ring (50) having a wire magazine (70) on which the wire (100, 110) pulled out of the wire-unwinding device (150) is coiled round.

6. Fastening device according to one of the preceding claims, **characterized in that** in the one position (350, 520) of the switching rocker (120, 200) the wire (100, 110) is deflected at least once as it is being pulled out.

7. Fastening device according to one of the preceding claims, **characterized in that** the switching rocker (120, 200) is switched over from the one position (350, 520) into the other position (360, 530) pyrotechnically.

8. Fastening device according to one of the preceding claims, **characterized in that** the switching rocker (120, 200) is switched over from the one position (350, 520) into the other position (360, 530) with an electromagnet.

9. Fastening device according to one of the preceding claims, **characterized in that** the switching rocker (120, 200) is arranged in such a manner that it has to carry out work of deformation during the transfer from the one position (350, 520) into the other position (360, 530).

## Revendications

1. Dispositif de fixation pour une ceinture de sécurité (5) pourvu d'au moins un élément limitant la force de la ceinture, lequel limite la force de maintien (F1, F2, F3, F4) exercée sur une personne protégée par l'intermédiaire de la ceinture de sécurité (5), permettant un relâchement prédéterminé de la ceinture de sécurité (5), l'élément limitant la force de la ceinture étant pourvu d'un dispositif de déroulement de fil métallique (600), à partir duquel au moins un fil métallique (100, 110) est amovible par l'intermédiaire d'une force de traction prédéterminée, et une extrémité de la ceinture de sécurité est reliée directement ou indirectement à au moins un fil métallique (100, 110), de telle sorte qu'au moins un fil métallique (100, 110) soit retiré du dispositif de déroulement de fil métallique (600) aussitôt que la force de maintien (F1, F2, F3, F4) exercée sur l'occupant à partir de la ceinture de sécurité atteint la force de traction souhaitée, **caractérisé en ce que** le dispositif de déroulement de fil métallique (600) est pourvu d'au moins un bouton interrupteur (120, 200), par l'intermédiaire duquel le fil métallique (100, 110) est acheminé, le bouton interrupteur (120, 200) étant pourvu de deux positions (350, 360, 520, 530), à partir desquelles une position (350, 520) du bouton interrupteur (120, 200) entraîne une plus grande force de traction pour retirer le fil métallique (100, 110) que l'autre position (360, 530).

2. Dispositif de fixation selon la revendication 1, **caractérisé en ce qu'**au moins un fil métallique (100, 110) est plié au moins une fois lors de la traction.

3. Dispositif de fixation selon la revendication 2, **caractérisé en ce que** le repli d'au moins un fil métallique (100, 110) est effectué à l'aide d'au moins une poulie de pliage et/ou une tige de pliage, lors de la traction.

4. Dispositif de fixation selon l'une quelconque des revendications précédentes, **caractérisé en ce que** le dispositif de fixation est pourvu d'un dispositif d'enroulement de ceinture (15) ayant une broche (10) enroulant et déroulant la ceinture, laquelle agit ensemble, directement ou indirectement, avec au moins un fil métallique (100, 110) du dispositif de déroulement de fil métallique (150).

5. Dispositif de fixation selon la revendication 4, **caractérisé en ce qu'**une couronne de cliquet de la roue à rochet (50) est disponible, laquelle peut être combinée à la broche (10) de manière à résister à la torsion par l'intermédiaire d'un rochet (30), la couronne de cliquet de la roue à rochet (50) étant pourvue d'un magasin de fil métallique (70), sur lequel le fil métallique (100, 110) retiré du dispositif de déroulement de fil métallique (150) est enroulé.

6. Dispositif de fixation selon l'une quelconque des revendications précédentes, **caractérisé en ce que** le fil métallique (100, 110), lors de la position (350, 520) du bouton interrupteur (120, 200), est plié au moins une fois lors de la traction.

7. Dispositif de fixation selon l'une quelconque des revendications précédentes, **caractérisé en ce que** l'inversion du bouton interrupteur (120, 200), d'une position (350, 520) à l'autre position (360, 530), est effectuée de manière pyrotechnique.

8. Dispositif de fixation selon l'une quelconque des revendications précédentes, **caractérisé en ce que** l'inversion du bouton interrupteur (120, 200), d'une position (350, 520) à l'autre position (360, 530), est effectuée à l'aide d'un électroaimant.

9. Dispositif de fixation selon l'une quelconque des revendications précédentes, **caractérisé en ce que** le bouton interrupteur (120, 200) est agencé de telle sorte qu'il soit contraint, lors du passage d'une position (350, 520) à l'autre position (360, 530), d'effectuer un travail de déformation.
